# EUROPEAN PATENT SPECIFICATION

(11) **EP 2 291 779 B1**
(45) Date of publication and mention of the grant of the patent: **20.02.2013**
(21) Application number: 09765785.2
(22) Date of filing: 10.06.2009
(51) Int. Cl.: G06F 17/30

(54) **METHOD OF GENERATING A DOCUMENT FROM A WEB SERVER LOCATED IN A PORTABLE ELECTRONIC DEVICE**
VERFAHREN ZUR ERZEUGUNG EINES DOKUMENTS AUF EINEM IN EINER TRAGBAREN ELEKTRONISCHEN VORRICHTUNG BEFINDLICHEN WEBSERVER
PROCÉDÉ DE GÉNÉRATION D'UN DOCUMENT À PARTIR D'UN SERVEUR INTERNET SITUÉ DANS UN DISPOSITIF ÉLECTRONIQUE PORTABLE

(30) Priority: 20.06.2008 EP 08305290
(43) Date of publication of application: 09.03.2011
(73) Proprietor: Gemalto SA, 92190 Meudon (FR)
(72) Inventor: FOESSER, Christophe, F-La Ciotat 13600 (FR)
(86) International application number: PCT/EP2009/057185
(87) International publication number: WO 2009/153205

(56) References cited:
- WO-A-2007/107868
- US-A1- 2008 141 118
- "Dynamic HTML and XML: The XMLHttpRequest Object" APPLE DEVELOPER CONNECTION, [Online] 24 June 2005 (2005-06-24), XP002501685 Retrieved from the Internet: URL:http://developer.apple.com/internet/we bcontent/xmlhttpreq.html> [retrieved on 2008-10-29]
- URIEN P: "Internet card, a smart card as a true Internet node" COMPUTER COMMUNICATIONS, ELSEVIER SCIENCE PUBLISHERS BV, AMSTERDAM, NL, vol. 23, no. 17, 1 November 2000 (2000-11-01), pages 1655-1666, XP004238469 ISSN: 0140-3664
- "Telecoms News" CARD TECHNOLOGY TODAY, ELSEVIER, vol. 20, no. 3, 1 March 2008 (2008-03-01), page 7,16, XP022558656 ISSN: 0965-2590

## Description

### (Field of the invention)

The present invention relates to methods of generating HTML or XML documents from a web server located in a portable electronic device. It relates particularly to methods of generating document intended to be used by a web browser on a client machine linked to a portable electronic device. In particular, the present invention is well suited for web servers embedded in smart cards.

### (Prior art)

Portable electronic devices are portable electronic objects like smart cards, portable audio devices, mobile handsets, personal digital assistants or USB tokens. Portable electronic devices may embed a web server that may be addressed from a client machine directly connected to the portable electronic device. The embedded web server may also be addressed from a remote client machine which is connected to the portable electronic device through one or several networks. Such a web server provides services according to the World Wide Web consortium rules (W3C).

A portable electronic device may be connected to a host machine by a contact channel or a contactless channel. Most of the existing client machines have an Internet web browser like Microsoft Internet Explorer ® or Mozilla Firefox ®. The web browser of the client machine may act as a client actor when trying to load a HTML page from the web server of the connected portable electronic device.

A dynamic document is a document whose content is not fixed and must be dynamically built. A dynamic HTML document has a dynamic content. At present for loading a dynamic HTML page from the web server of a portable electronic device, the HTML page must be generated into the portable electronic device. A text-oriented solution for such a generation may be to perform a parsing of a preset document. In this case the generation corresponds to a modification of a preset document. The parsing operation is carried out by searching then replacing predefined tags. Such a parsing operation requires knowing the number of each kind of data to be included in the HTML page. For example, when a table is going to be filled, the row number must be known as a preliminary. However the row number may be unknown prior to generate the HTML document, especially if the number of rows depends on data stored in a file having a variable content.

Moreover such a parsing engine must know the list of tags to be searched. In addition, many portable electronic devices are compliant with languages that are not string-oriented. In particular, a lot of portable electronic devices of smart card type are compliant with Javacard 2.x standard which does not support the String type. Thus the ByteArray type must be used which is resources consuming and leads to complex software code.

Patent publication US 2008/0141118 A1 discloses a system and method for extracting client script blocks from a portable device running a web server.

### (Summary of the Invention)

The object of the invention is to solve the above mentioned technical problems by the subject-metter of the appended claims.

The object of the present invention is a method of generating a document intended to be used by a browser on a client machine. The client machine comprises a script engine. A portable electronic device is connected to a host machine. The portable electronic device comprises a web server. The method comprising the steps of:
- establishing a client-server session between the client machine and the portable electronic device,
- sending a first request from the browser to the web server,
- sending first data from the web server to the browser in response to the first request, said first data comprising a first executable part intended to be interpreted by the script engine,
- sending a second request from the browser to the web server, said second request being generated by means of the script engine and the first executable part,
- generating dynamically second data in the portable electronic device in response to the second request,
- sending the second data from the web server to the browser, said second data being interpreted by the script engine (SE) for generating a part of the document.

In a preferred embodiment, the document is a HTML document or a XML document.

Advantageously, the method may comprise the further steps of:
- sending a third request from the browser to the web server, the third request being generated by means of the script engine and the second data,
- generating third data in the portable electronic device in response to the third request,
- sending the third data from the web server to the browser, said third data being interpreted by the script engine for generating a part of the document.

Alternatively, the third request may be generated by means of the script engine and the first executable part.

Advantageously, the second data may comprise data used by the script engine for generating a part of the document.

In a preferred embodiment, the script engine is a Javascript ® engine and first and second data are of Javascript ® type.

Advantageously, the second data is generated by a server extension.

In a preferred embodiment, the server extension is Javascript ® servlet.

Another object of the invention is a portable electronic device intended to be connected to a host machine. The portable electronic device is intended to be linked to a client machine through a client-server session. The client machine comprises a browser and a script engine. The portable electronic device comprises a microprocessor, a communication interface, an operating system, a working memory and a non volatile memory. The portable electronic device also comprises a web server, first data, and first means able to send first data to the browser in response to a first request received from said browser. The first data comprises a first executable part intended to be interpreted by the script engine and the portable electronic device comprises second means able to dynamically generate second data in response to a second request received from the browser. The second data are used by the script engine for generating a part of a document intended to be used by the browser.

In a preferred embodiment, the document is a HTML document or a XML document.

Advantageously, said second data may comprise data used by the script engine for generating a part of the document.

In a preferred embodiment, the first and second data are of Javascript ® type.

Advantageously, the second means may be a server extension.

In a preferred embodiment, the second means is a Javascript ® servlet.

The portable electronic device may be a smart card.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of architecture of a portable electronic device intended to provide a HTML document according to the invention;
- Figure 2 is an example of step sequence for generating a HTML document according to the invention;
   and
- Figure 3 depicts schematically an example of communication exchanged between a client machine and a portable electronic device according to the invention.

### (Detailed description of the preferred embodiments)

The invention may apply to any types of portable electronic devices. In this specification, the portable electronic device is a smart card but it could be any other kind of portable electronic device comprising a web server.

The invention may apply to any types of client machines. In this specification, the client machine is a telecom handset but it could be any other kind of client like a personal computer for example. In this specification, the client machine is the host machine but it could be any remote client machine able to establish a client-server session with the portable electronic device.

The present invention relies on the use of script engine coupled to a web browser. It is a matter of fact that the use of scrip is very common in the web domain and most of the web browsers are deployed with a coupled script engine. An advantage of the invention is to take advantage of host resources. In particular, the script engine of the client machine has less resource limitations than a script engine of a portable electronic device. Interpretation of script requires a lot of resources and is time consuming on a portable electronic device. Interpretation of script is performed in a faster way on the client machine than on a portable electronic device like a smart card.

An additional advantage of the invention is to take advantage of further upgrades of the script engine on client side without any change on portable electronic device side.

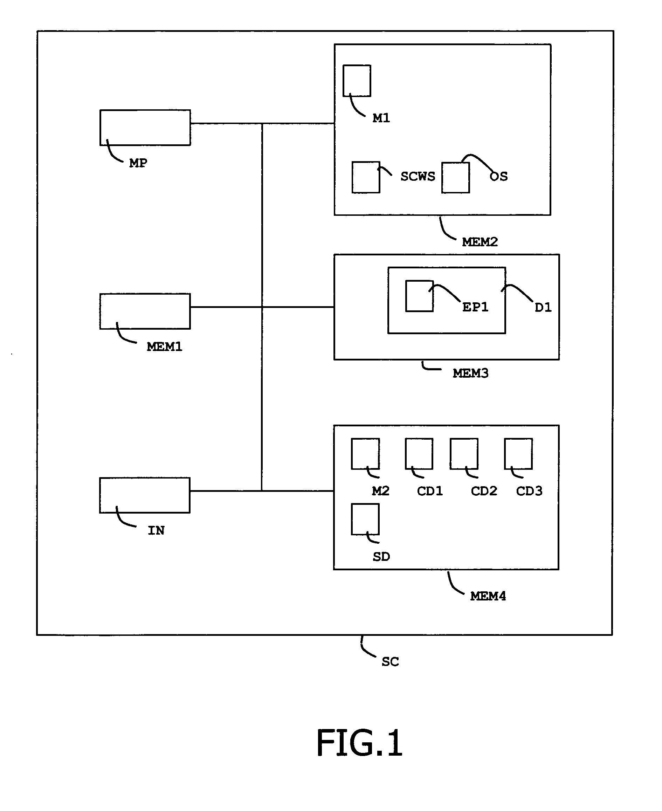

Figure 1 shows the architecture of a portable electronic device SC of SIM smart card type according to a preferred embodiment of the invention.

The portable electronic device SC comprises a working memory MEM1 of RAM type, a non volatile memory MEM2, a microprocessor MP and a communication interface IN. The working memory MEM1 comprises a web server SCWC and an operating system OS.

In addition, the portable electronic device SC comprises two non volatile memories MEM3 and MEM4. The memory MEM3 stores a first data D1. In the preferred embodiment the memory MEM3 is managed as a file system area and the first data D1 is a HTML document. D1 comprises a first executable part EP1 which is intended to be interpreted by a web browser. EP1 is a script of Javascript ® type. The memory MEM4 stores card data CD1, CD2 and CD3.

The portable electronic device SC comprises first and second means M1 and M2. First means M1 is able to send the data D1 to the browser of the linked client machine. The second means M2 is able to dynamically generate a second data D2 from data CD1, CD2 and CD3 stored in the SIM card. In a preferred embodiment, means M2 is a Javascript ® servlet.

The three memories MEM2, MEM3 and MEM4 may be implemented as any combinations of one, two or three memories. These memories may be NAND flash or EEPROM memory or another type of non volatile memory.

The SIM card SC is intended to exchange messages with a telecom handset HM through the communication interface IN.

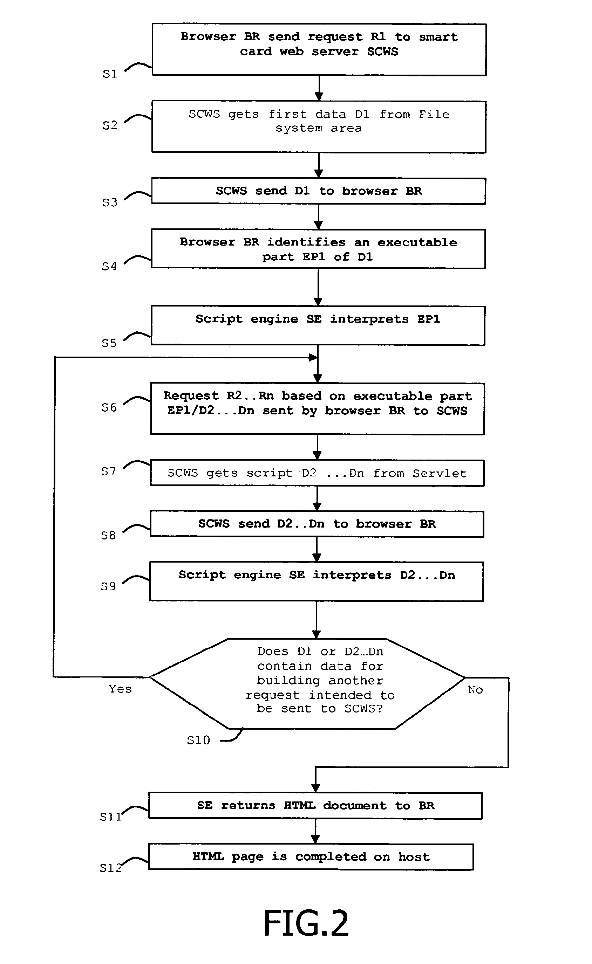

Figure 2 shows an example of a step sequence for generating a HTML document to be displayed by a browser on the telecom handset HM.

First a user launches a web browser BR on the telecom handset HM. In step S1, the browser BR sends a first request R1 to the web server SCWS embedded on the SIM card. The request R1 contains the reference of the HTML page required by the browser BR. For example, the page reference to be reached may be http://192.168.0.2/home.html or https://192.168.0.2/home.html in TCP/IP protocol or http://localhost:3516/home in Bearer Independent Protocol, also called BIP. Then the web server SCWS gets the first data D1 from the file system area of MEM3 at step S2. The first data D1 comprises both a static HTML part and an executable part EP1. In this example, EP1 is a Javascript ® code. Then at step S3, the first data D1 is sent to the browser BR. At receipt of D1, the step S4 is reached. The browser BR identifies the executable part EP1. Then the browser BR delegates the interpretation of EP1 to the script engine SE at step S5. The executable part EP1 allows the script engine SE to build a second request R2 intended to be sent to the web server SCWS. At step S6, the second request R2 is sent to the web server SCWS. At step S7, the web server SCWS gets a second script D2 from second means M2. In this example, means M2 is a Javascript ® servlet. The servlet builds the second data D2 from data stored in the SIM card. In this example, D2 is a Javascript ® document and the servlet may build the second data D2 from CD1 and CD2. At step S8, the web server sends the second data D2 to the browser BR. Then the browser BR delegates the interpretation of the script D2 to the script engine SE at step S9. At step S10, a check of D1 and D2 is performed in order to detect the presence of an element dedicated to the building of an additional request intended to be sent to the web server SCWS. If the data D1 or D2 contains an element needing the sending of a new request to the SCWS, then a third requests R3 is built from D2 and a loop is done by jumping back to the step S6. In other words, the script engine SE request the browser BR to get a new script from the web server SCWS. If the data D1 and D2 do not contain any element requiring the sending of a new request to the SCWS, then the HTML page is completed with data returned by the script engine SE. The data returned by script engine SE is built from the data D1 and or D2. At step S11, the script engine SE sends the final HTML page to the browser BR. Then at step S12, the HTML generation is successfully performed and may be displayed by the browser BR on the handset display.

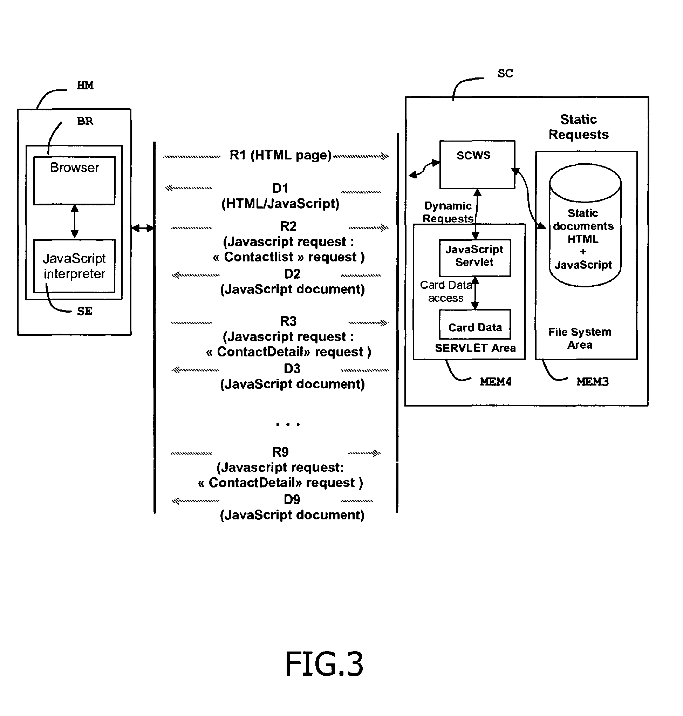

**Figure 3** shows an example of communication exchanges between a Telecom handset HM and a SIM card according to a preferred embodiment of the invention. In this example, the Telecom handset HM aims at displaying all phone numbers of a phonebook stored in the SIM card. Assuming that seven telephone numbers are stored in the phonebook of the SIM card, the HTML page to be displayed on the Handset terminal HM should contain a list of seven telephone numbers. In this example the script engine SE is a Javascript ® interpreter.

First the browser BR sends the request R1 to the web server SCWS. The request R1 corresponds to a request for getting an HTML page from the SIM web server SCWS. Then the web server SCWS sends back D1 data which comprises both a HTML part and a first Javascript ® part EP1.

In the following example, EP1 has two parts: a first part in the header and a second part in the body.

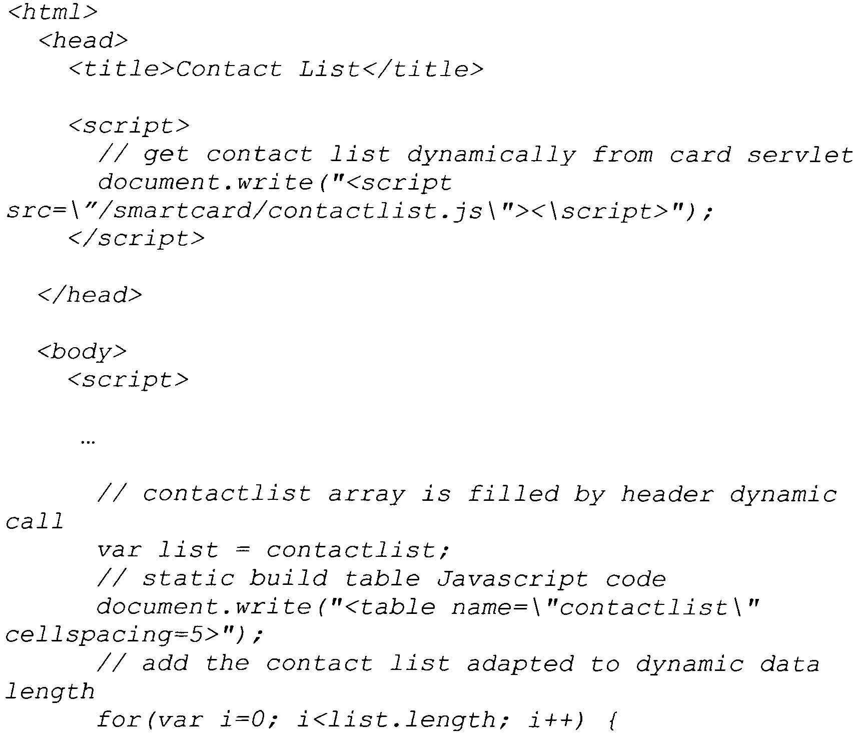

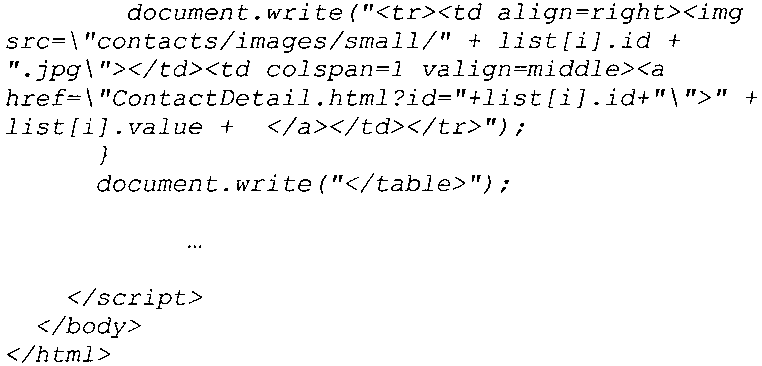

The first part allows building the R2 request (src="/smartcard/contactlist.js"). The second part allows the dynamic building of a table according to D2 data retrieved from the web server SCWS in response to the R2 request.

The Browser BR sends the first Javascript ® part EP1 to the script engine SE. By using the Javascript ® part EP1, the Javascript ® interpreter SE builds a second request R2 which corresponds to a Javascript ® request. R2 is provided to the browser BR which sent R2 to the web server SCWS. The web server SCWS sends the R2 request to the Javascript ® servlet M2. In response the Javascript ® servlet dynamically builds a D2 Javascript ® document from data stored in the SIM card. The D2 Javascript ® document comprises the list of contacts stored in the phonebook. Then for each of the contacts, the Javascript ® interpreter SE builds a further request R3 to R9 which corresponds to the request of detail related to each contact. Thus the script engine SE gets progressively all data allowing building the HTML document to be display on the mobile phone HM. The D3 Javascript ® document comprises the first telephone number. The D3 Javascript ® document is then sent to the browser BR by the SIM card. The Javascript ® interpreter SE builds a fourth request R4 which corresponds to a Javascript ® request. R4 allows getting the second telephone number stored in the SIM card. The sequence is repeated until retrieving the last telephone number of the SIM phonebook. In other words, the sequence is repeated until request R9. The ninth D9 Javascript ® document comprises the seventh telephone number and no additional executable part. On receipt of the D9 document, the browser BR is now able to display the complete list of telephone numbers on the Telecom handset HM display.

Advantageously, the Javascript ® documents generated by the servlet on the SIM card may contain additional data related to the phone number like a picture, a name or an e-mail for example.

In the above example, the invention relies on a first Javascript ® executable part included in a static HTML page. This first Javascript ® executable part imports a Javascript ® document which is dynamically generated by a servlet in the SIM card. The generated Javascript ® document may contain a second Javascript ® executable part which allows building the targeted HTML page.

The HTML page is built dynamically thanks to a succession of progressive extensions of the HTML page content via several Javascript ® requests. The script engine SE located on client side interprets on the fly the series of executable codes as a global Javascript ® code. Thus the HTML page structures are not hard coded in the servlet part. The HTML page structures may be easily modified in the portable electronic device through a standard web design tool.

According to the present invention, the process of document generation is sequential with a minimum of processing done by the portable electronic device. The portable electronic device does provide the browser BR of the client machine with structured data. The browser BR uses the received structured data and executable parts in order to create a HTML page via the script engine SE.

The Javascript code sent by the servlet may be sequentially built. Series of requests to the servlet may be sent through loops. Thus the invention avoids reserving a large memory buffer and avoids identifying the size of such a buffer at the beginning. Thanks to the chunk mode the invention allows building the code on the fly.

In the above described examples, the portable electronic device SC is directly connected to the client machine comprising the active browser BR. In this case the client machine is the host machine.

Advantageously, the client machine may be distinct from the host machine. In this case, the host machine is a gateway between the portable electronic device SC and the client machine.

An advantage of the invention is to allow generating document with data stored in the smart card, whatever the number of items/data to be inserted in the HTML page is. The invention allows a dynamic generation of the HTML page structure according to the data to be inserted in the HTML page. There is no need to know the number of items/records to be treated prior to the generation. If the size of a given element is going to be determined, the size is dynamically defined by the script part according to data extracted from the SIM card.

Another advantage of the invention is to require a small memory size for storing the servlet. Compared with a parsing solution, an advantage of the invention is to avoid storing strings to be searched and replaced. This point is very important since the memory resources of the portable electronic device SC are limited.

Moreover if the document structure must change, the servlet may be kept unchanged.

Another advantage of the invention is to require a limited bandwidth between the portable electronic device and the client machine HM since only series of structured data is sent by the portable electronic device with a limited overhead. The portable electronic device does not send the entire final HTML document as such. The portable electronic device sends a preset HTML document as a seed. Then the sent seed document is completed in the client machine by the web browser.

An additional advantage of the invention is that there is no need of parsing routine in the portable electronic device.

Alternatively, the invention may be used for the XML page generation. The invention may use other scripting systems that need to be interpreted by a script engine.

Alternatively, parameters may be used for customizing the request sent to the servlet. In the example of a phonebook the following request "Createcontact.js ? id=3" allows to get the third contact stored in the phonebook. The request "Createcontact.js ? type=phonenumber" allows getting the telephone number of all contacts stored in the phonebook. The request "Createcontact.js ? type=photo" allows getting the path of the photo related to all contacts stored in the phonebook.

Advantageously, data exchanged between the client machine and the portable electronic device may be protected thanks to security mechanisms like integrity and confidentiality mechanism. Such security mechanisms are well known in the smart card domain or web domain. For example, the exchanged data may be protected thanks to the Secure Sockets Layer also named SSL or thanks to the Transport Layer Security also named TLS.

In an embodiment, the two card data CD1 and CD2 may be stored in a format specific to the portable electronic device. In particular, CD1 and CD2 may be stored in a format which is not directly compatible with the browser BR, especially when the portable electronic device is a smart card. For example, a JavaCard is not able to manage the Text mode even though the browser BR works in Text mode. Moreover the web server SCWS embedded in a smart card has limited features since resources of the smart card SC are limited. In particular, the Java Server Pages (also named JSP) are not available in a Javacard. In addition, a usual web server SCWS is intended to generate and send static documents or basic dynamic documents. Basic dynamic documents are documents with a very limited complexity.

Advantageously, the first data D1 may comprises a set of variables to be initialized for generating the document DOC. The first data D1 may comprises a second executable part which is capable of extracting the content of the second data D2. The second executable part is specific to the means M2 since the second executable part is able to understand the format and the structure of data generated by the means M2. The means M2 may be a servlet which is able to extracts card data and to generate corresponding data which can be used on client machine side. For example when a card data is stored in ByteArray or Integer format, the means M2 may translate the card data in the corresponding value in String format. Moreover, if the card data is stored through a file system into the smart card SC, the means M2 performs a series of format translations.

The first data D1 may comprise a third executable part which is capable of initializing the set of variables from the content extracted from the second data D2. The third executable part acts as a connector between the data sent by the card SC and the variables which allow building the document DOC. The third executable part may be implemented as a method which is called by the further scripts R2 and R3. Both second and third executable parts are intended to be interpreted by the script engine SE.

## Claims

1. A method of generating a document (DOC) intended to be used by a browser (BR) on a client machine, said client machine comprising a script engine (SE), a smart card (SC) being connected to a host machine (HM), said smart card (SC) comprising a web server (SCWS) and card data (CD1, CD2), said method comprising the steps of:
a) establishing a client-server session between the client machine and the smart card (SC),
b) sending a first request (R1) from the browser (BR) to the web server (SCWS),
**characterized in that** said method comprises the steps of:
c) sending first data (D1) from the web server (SCWS) to the browser (BR) in response to the first request (R1), said first data (D1) comprising first (EP1), second and third executable parts intended to be interpreted by the script engine (SE), said first data (D1) comprising a set of variables to be initialized for generating the document (DOC),
d) sending a second request (R2) from the browser (BR) to the web server (SCWS), said second request (R2) being generated by means of the script engine (SE) and the first executable part (EP1),
e) generating dynamically second data (D2) from said card data (CD1, CD2) in the smart card (SC) in response to the second request (R2),
f) sending the second data (D2) from the web server (SCWS) to the browser (BR), said second data (D2) being interpreted by the script engine (SE) for generating a part of the document (DOC), said second executable part being able to extract content of the second data (D2) and said third executable part being able to initialize the variables from content of the second data (D2).

2. A method according to claim 1, wherein said document (DOC) is a HTML document or a XML document.

3. A method according to one of claims 1 or 2, wherein said method comprises the further steps of:
g) sending a third request (R3) from the browser (BR) to the web server (SCWS), said third request (R3) being generated by means of the script engine (SE) and said second data (D2) or said first executable part (EP1),
h) generating third data (D3) in the smart card (SC) in response to the third request (R3),
i) sending the third data (D3) from the web server (SCWS) to the browser (BR), said third data (D3) being interpreted by the script engine (SE) for generating a part of the document (DOC).

4. A method according to one of claims 1 to 3, wherein said second data (D2) comprises data (SD) used by the script engine (SE) for generating a part of the document (DOC).

5. A method according to one of claims 1 to 4, wherein said script engine (SE) is a Javascript ® engine and wherein first and second data (D1, D2) are of Javascript ® type.

6. A method according to one of claims 1 to 5, wherein said second data (D2) is generated by a server extension.

7. A method according to claim 6, wherein said server extension is Javascript ® servlet.

8. A smart card (SC) intended to be connected to a host machine (HM), said smart card (SC) being intended to be linked to a client machine through a client-server session, said client machine comprising a browser (BR) and a script engine (SE), said smart card (SC) comprising:
- a microprocessor (MP),
- a communication interface (IN),
- an operating system (OS),
- a working memory (MEM1) and a non volatile memory (MEM2),
- a web server (SCWS),
- first data (D1),
- card data (CD1, CD2),
- first means (M1) able to send first data (D1) to the browser (BR) in response to a first request (R1) received from the browser (BR),
**characterized in that** said first data (D1) comprises first (EP1), second and third executable parts intended to be interpreted by the script engine (SE), **in that** said first data (D1) comprises a set of variables to be initialized for generating the document (DOC), and **in that** said smart card (SC) comprises:
- a second means (M2) able to dynamically generate second data (D2) in response to a second request (R2) received from the browser (BR), said second data (D2) being used by the script engine (SE) for generating a part of a document (DOC) intended to be used by the browser (BR), said second executable part being able to extract content of the second data (D2) and said third executable part being able to initialize the variables from content of the second data (D2).

9. A smart card (SC) according to claim 8, wherein said document (DOC) is a HTML document or a XML document.

10. A smart card (SC) according to one of claims 8 or 9, wherein said second data (D2) comprises data (SD) used by the script engine (SE) for generating a part of the document (DOC).

11. A smart card (SC) according to one of claims 8 or 10, wherein first and second data (D1, D2) are of Javascript ® type.

12. A smart card (SC) according to one of claims 8 to 11, wherein said second means (M2) is a server extension.

13. A smart card (SC) according to claim 12, wherein said second means (M2) is a Javascript ® servlet.

## Patentansprüche

1. Verfahren zur Erzeugung eines Dokuments (DOC), das zur Benutzung durch einen Browser (BR) auf einer Client-Maschine bestimmt ist, wobei die genannte Client-Maschine ein Scriptgerät(SE) umfasst, wobei eine Speicherkarte (SC) an eine Host-Maschine (HM) angeschlossen ist, wobei die genannte Speicherkarte (SC) einen Webserver (SCWS) und Kartendaten (CD1, CD2) umfasst, wobei das genannte Verfahren die folgenden Stufen umfasst:
a) Herstellen einer Client-Serversitzung zwischen der Client-Maschine und der Speicherkarte (SC),
b) Versenden einer ersten Anfrage (R1) vom Browser (BR) zum Webserver (SCWS),
**dadurch gekennzeichnet, dass** das genannte Verfahren die folgenden Stufen umfasst:
c) Versenden von ersten Daten (D1) vom Webserver (SCWS) an den Browser (BR) als Antwort auf die erste Anfrage (R1), wobei die genannten ersten Daten (DA) erste (EP1), zweite und dritte ausführbare Teile umfassend, die dazu bestimmt sind, vom ersten Gerät (SE) interpretiert zu werden, wobei die ersten Daten (D1) einen Satz von Variablen umfassen, die zur Generierung des Dokuments (DOC) zu initialisieren sind,
d) Versenden einer zweiten Anfrage (R2) vom Browser (BR) zum Webserver (SCWS), wobei die genannte zweite Anfrage (R2) mittels des Scriptgeräts (SE) und des ersten ausführbaren Teils (EP1) generiert wird,
e) dynamisches Generieren von zweiten Daten (D2) von den genannten Kartendaten (CD1, CD2) in der Speicherkarte (SC) als Antwort auf die zweite Anfrage (R2),
f) Versenden der zweiten Daten (D2) vom Webserver (SCWS) an den Browser (BR), wobei die genannten zweiten Daten (D2) vom Scriptgerät (SE) zum Generieren eines Teils des Dokuments (DOC) interpretiert werden, wobei der genannte zweite ausführbare Teil in der Lage ist, Inhalt der zweiten Daten (D2) zu extrahieren und der genannte dritte ausführbare Teil in der Lage ist, die Variablen vom Inhalt der zweiten Daten (D2) zu initialisieren.

2. Verfahren gemäß Anspruch 1, bei dem das Dokument (DOC) ein HTML-Dokument oder ein XML-Dokument ist.

3. Verfahren gemäß Anspruch 1 oder 2, bei dem das genannte Verfahren die folgenden weiteren Stufen umfasst:
g) Versenden einer dritten Anfrage (R3) vom Browser (BR) an den Webserver (SCWS), wobei die genannte dritte Anfrage (R3) mittels des Scriptgeräts (SE) und den genannten zweiten Daten (D2) oder des genannten ersten ausführbaren Teils (EP1) generiert werden,
h) Generieren von dritten Daten (D3) in der Speicherkarte (SC) als Antwort auf die dritte Anfrage (R3),
i) Versenden der dritten Daten (D3) vom Webserver (SCWS) an den Browser (BR), wobei die genannten dritten Daten (D3) vom Scriptgerät (SE) zum Generieren eines Teils des Dokument (DOC) interpretiert werden.

4. Verfahren gemäß Anspruch 1 bis 3, bei dem die genannten zweiten Daten (D2) Daten (SD) umfassen, die vom Scriptgerät (SE) zum Generieren eines Teils des Dokuments (DOC) benutzt werden.

5. Verfahren gemäß Anspruch 1 bis 4, bei dem das genannte Scriptgerät (SE) ein Gerät Javascript® ist und bei dem erste und zweite Daten (D1, D2) vom Typ Javascript® sind.

6. Verfahren gemäß Anspruch 1 bis 5, bei dem die genannten zweiten Daten (D2) durch eine Server-Erweiterung generiert werden.

7. Verfahren gemäß Anspruch 6, bei dem die Server-Erweiterung ein Servlet Javascript® ist.

8. Speicherkarte (SC), die zum Anschließen an eine Host-Maschine (HM) bestimmt ist, wobei die genannte Speicherkarte (SC) dazu bestimmt ist, mit einer Client-Maschine über eine Client-Serversitzung verlinkt zu werden, wobei die genannte Client-Maschine einen Browser (BR) und ein Scriptgerät (SE) umfasst, wobei die genannte Speicherkarte (SC) umfasst:
- einen Mikroprozessor (MP)
- eine Kommunikationsschnittstelle (IN),
- ein Betriebssystem (OS),
- einen Arbeitsspeicher (MEM1) und einen nicht flüchtigen Speicher (MEM2),
- einen Webserver (SCWS),
- erste Daten (D1),
- Kartendaten (CD1, CD2),
- erste Mittel (M1), die in der Lage sind, als Antwort auf eine erste Anfrage (R1), die vom Browser (BR) empfangen wurde, erste Daten (D1) an den Browser (BR) zu senden,
**dadurch gekennzeichnet, dass** erste Daten (D1) erste (EP1), zweite und dritte ausführbare Teile umfassen, die vom Scriptgerät (SE) zu interpretieren sind, dass die genannten ersten Daten (D1) einen Satz aus Variablen umfassen, die zum Generieren des Dokuments (DOC) zu initialisieren sind, und dass die genannte Speicherkarte (SC) umfasst:
- ein zweites Mittel (M2), das in der Lage ist, dynamisch zweite Daten (D2) als Antwort auf eine zweite Anfrage (R2) zu generieren, die vom Browser (BR) empfangen wird, wobei die genannten zweiten Daten (D2) vom Scriptgerät (SE) zum Generieren eines Teils eines Dokuments (DOC) benutzt werden, das zur Benutzung durch den Browser (BR) bestimmt ist, wobei der genannte zweite ausführbare Teil in der Lage ist, Inhalt der zweiten Daten (D2) zu extrahieren und der genannte dritte ausführbare Teil in der Lage ist, die Variablen vom Inhalt der zweiten Daten (D2) zu initialisieren.

9. Speicherkarte (SC) gemäß Anspruch 8, bei der das genannte Dokument (DOC) ein HTML-Dokument oder ein XML-Dokument ist.

10. Speicherkarte (SC) gemäß Anspruch 8 oder 9, bei der die genannten zweiten Daten (D2) Daten (SD) umfassen, die vom Scriptgerät (SE) zum Generieren eines Teils des Dokuments (DOC) benutzt werden.

11. Speicherkarte (SC) gemäß Anspruch 8 oder 10, bei dem erste und zweite Daten (D1, D2) vom Typ Javascript ® sind.

12. Speicherkarte (SC) gemäß Anspruch 8 bis 11, bei der das genannte zweite Mittel (M2) eine Server-Erweiterung ist.

13. Speicherkarte (SC) gemäß Anspruch 12, bei der das genannte zweite Mittel (M2) ein Servlet Javascript ® ist.

## Revendications

1. Procédé de génération d'un document (DOC) destiné à être utilisé par un navigateur (BR) sur une machine client, ladite machine client comprenant un moteur de script (SE), une carte à puce (SC) reliée à une machine hôte (HM), ladite carte à puce (SC) comprenant un serveur internet (SCWS) et des données sur carte (CD1, CD2), ledit procédé comprenant les étapes :
a) d'établissement d'une session client/serveur entre la machine client et la carte à puce (SC),
b) d'envoi d'une première requête (R1) du navigateur (BR) au serveur internet (SCWS),
**caractérisé en ce que** ledit procédé comprend les étapes :
c) d'envoi de premières données (D1) du serveur internet (SCWS) au navigateur (BR) en réponse à la première requête (R1), lesdites premières données (D1) comprenant une première (EP1), une deuxième et une troisième parties exécutables, destinées à être interprétées par le moteur de script (SE), lesdites premières données (D1) comprenant un ensemble de variables à initialiser pour générer le document (DOC),
d) d'envoi d'une deuxième requête (R2) du navigateur (BR) au serveur internet (SCWS), ladite deuxième requête (R2) étant générée au moyen du moteur de script (SE) et de la première partie exécutable (EP1),
e) de génération dynamique de secondes données (D2) à partir desdites données sur carte (CD1, CD2) dans la carte à puce (SC), en réponse à la deuxième requête (R2),
f) d'envoi des secondes données (D2) par le serveur internet (SCWS) au navigateur (BR), lesdites secondes données (D2) étant interprétées par le moteur de script (SE) pour générer une partie du document (DOC), ladite seconde partie exécutable étant capable d'extraire le contenu des secondes données (D2) et ladite troisième partie exécutable étant capable d'initialiser les variables à partir du contenu des secondes données (D2).

2. Procédé selon la revendication 1, dans lequel ledit document (DOC) est un document HTML ou un document XML.

3. Procédé selon l'une quelconque des revendications 1 ou 2, dans lequel ledit procédé comprend les étapes supplémentaires :
g) d'envoi d'une troisième requête (R3) par le navigateur (BR) au serveur internet (SCWS), ladite troisième requête (R3) étant générée au moyen du moteur de script (SE) et desdites deuxièmes données (D2) ou de ladite première partie exécutable (EP1),
h) de génération de troisièmes données (D3) dans la carte à puce (SC), en réponse à la troisième requête (R3),
i) d'envoi des troisièmes données (D3) par le serveur internet (SCWS) au navigateur (BR), lesdites troisièmes données (D3) étant interprétées par le moteur de script (SE) pour générer une partie du document (DOC).

4. Procédé selon l'une quelconque des revendications 1 à 3, dans lequel lesdites secondes données (D2) comprennent des données (SD) utilisées par le moteur de script (SE) pour générer une partie du document (DOC).

5. Procédé selon l'une quelconque des revendications 1 à 4, dans lequel ledit moteur de script (SE) est un moteur Javascript ®, et dans lequel des premières et secondes données (D1, D2) sont de type Javascript ®.

6. Procédé selon l'une quelconque des revendications 1 à 5, dans lequel lesdites secondes données (D2) sont générées par une extension de serveur.

7. Procédé selon la revendication 6, dans lequel ladite extension de serveur est un servlet Javascript®.

8. Carte à puce (SC) destinée à être raccordée à une machine hôte (HM), ladite carte à puce (SC) étant destinée à être reliée à une machine client par une session client/serveur, ladite machine client comprenant un navigateur (BR) et un moteur de script (SE), ladite carte à puce (SC) comprenant :
- un microprocesseur (MP),
- une interface de communication (IN),
- un système d'exploitation (OS),
- une mémoire de travail (MEM1) et une mémoire non volatile (MEM2),
- un serveur internet (SCWS),
- des premières données (D1),
- des données sur carte (CD1, CD2),
- un premier moyen (M1) capable d'envoyer des premières données (D1) au navigateur (BR), en réponse à une première requête (R1) reçue du navigateur (BR),
**caractérisée en ce que** lesdites premières données (D1) comprennent une première (EP1), une deuxième et une troisième parties exécutables, destinées à être interprétées par le moteur de script (SE), **en ce que** lesdites premières données (D1) comprennent un ensemble de variables à initialiser pour générer le document (DOC), et **en ce que** ladite carte à puce (SC) comprend :
- un second moyen (M2) capable de générer dynamiquement des secondes données (D2), en réponse à une seconde requête (R2) reçue du navigateur (BR), lesdites secondes données (D2) étant utilisées par le moteur de script (SE), pour générer une partie d'un document (DOC), destinée à être utilisé par le navigateur (BR), ladite seconde partie exécutable étant capable d'extraire le contenu des secondes données (D2) et ladite troisième partie exécutable étant capable d'initialiser les variables à partir du contenu des secondes données (D2).

9. Carte à puce (SC) selon la revendication 8, dans laquelle ledit document (DOC) est un document HTML ou un document XML.

10. Carte à puce (SC) selon l'une des revendications 8 ou 9, dans laquelle lesdites deuxièmes données (D2) comprennent des données (SD) utilisées par le moteur de script (SE) pour générer une partie du document (DOC).

11. Carte à puce (SC) selon l'une quelconque des revendications 8 ou 10, dans laquelle lesdites premières et secondes données (D1, D2) sont de type Javascript ®.

12. Carte à puce (SC) selon l'une quelconque des revendications 8 à 11, dans laquelle ledit second moyen (M2) est une extension de serveur.

13. Carte à puce (SC) selon la revendication 12, dans lequel ledit second moyen (M2) est un servlet Javascript®.
